# EUROPEAN PATENT SPECIFICATION

(11) **EP 1 227 623 B1**
(45) Date of publication and mention of the grant of the patent: **11.06.2014**
(21) Application number: 02001032.8
(22) Date of filing: 18.01.2002
(51) Int. Cl.: H04L 12/46, H04L 12/70

(54) **VLAN tunneling protocol**
VLAN Tunnelprotokoll
Protocole pour tunnel VLAN

(30) Priority: 30.01.2001 US 264998; 18.09.2001 US 956574
(43) Date of publication of application: 31.07.2002
(73) Proprietor: Alcatel Lucent, 75007 Paris (FR)
(72) Inventor: Clear, David, San Jose, California 95123 (US); Cheruathur, Sudhir, Sunnyvale, California 94089 (US); Erb, Guy, Spokane, Washington 99206 (US)
(74) Representative: Wetzel, Emmanuelle

(56) References cited:
- KIREETI KOMPELLA MANOJ LEELANIVAS QUAIZAR VOHRA JUNIPER NETWORKS RONALD BONICA WORLDCOM EDUARD METZ KPN DUTCH TELECOM TELEFONICA D: "MPLS-based Layer 2 VPNs; draft-kompella-mpls-l2vpn-01.txt;" IETF STANDARD-WORKING-DRAFT, INTERNET ENGINEERING TASK FORCE, IETF, CH, no. 1, October 2000 (2000-10), XP015031115 ISSN: 0000-0004
- HAMID OULD-BRAHIM BRYAN GLEESON GREGORY WRIGHT NORTEL NETWORKS TIMON SLOANE N E T RAINER BACH T-DATA RICK BUBENIK SAVVIS COMMUNICA: "Network based IP VPN Architecture using Virtual Routers; draft-ouldbrahim-vpn-vr-02.txt;" IETF STANDARD-WORKING-DRAFT, INTERNET ENGINEERING TASK FORCE, IETF, CH, no. 2, November 2000 (2000-11), XP015033604 ISSN: 0000-0004
- CASEY I CUNNINGHAM R EROS NORTEL NETWORKS NOVEMBER 1998 L: "IP VPN Realization using MPLS Tunnels; draft-casey-vpn-mpls-00.txt;" IETF STANDARD-WORKING-DRAFT, INTERNET ENGINEERING TASK FORCE, IETF, CH, November 1998 (1998-11), XP015011575 ISSN: 0000-0004
- HAERYONG LEE ET AL: "End-to-end QoS architecture for VPNs: MPLS VPN deployment in a backbone network" PARALLEL PROCESSING, 2000. PROCEEDINGS. 2000 INTERNATIONAL WORKSHOPS ON 21-24 AUGUST 2000, PISCATAWAY, NJ, USA,IEEE, 21 August 2000 (2000-08-21), pages 479-483, XP010511980 ISBN: 0-7695-0771-9
- GRENVILLE ARMITAGE ET AL: "MPLS: The Magic Behind the Myths" IEEE COMMUNICATIONS MAGAZINE, IEEE SERVICE CENTER, PISCATAWAY, US, vol. 38, no. 1, January 2000 (2000-01), pages 124-131, XP011091222 ISSN: 0163-6804
- R. HOUSLEY: 'Guidelines to Authors of Internet-Drafts', [Online] 07 December 2010, pages 1 - 10 IETF Retrieved from the Internet: <URL:http://www.ietf.org/ietf-ftp/1id-guide lines.txt> [retrieved on 2012-10-31]

## Description

### CROSS-REFERENCE TO RELATED APPLICATION(S)

This application claims the benefit of U.S. provisional application No. 60/264,998 filed on January 30, 2001.

### FIELD OF THE INVENTION

This invention relates generally to virtual bridged local area networks, and more particularly, to tunneling packets in such virtual bridged local area networks without loss of VLAN assignment information.

### BACKGROUND OF THE INVENTION

Recent vintage switching nodes often support virtual bridged local area networks (LANs). In virtual bridged LANs, data units (e.g. packets or frames) are classified into virtual LANs (VLANs) in order to differentiate service within a bridged LAN. IEEE Draft standard 802. 1Q entitled "IEEE Standard for Local and Metropolitan Area Networks: Virtual Bridge Local Area Networks," 1998, and IEEE Draft Standard 802.1V entitled "Draft Standard for Supplement to IEEE 802.1Q: IEEE Standard for Local and Metropolitan Area Networks: Virtual Bridge Local Area Networks," 2000, provide standard VLAN classification rules.

XP 015031115 relates to a virtual private network based on frame relay or ATM circuits. It is presented a VPN solution where the service provider maintains and manages a single MTLS-based network.

XP 015033604 relates to achieve different levels of network privacy building VPNs across a shared IP backbone.

XD 015011575 relates to ID VPN realization using MPLS tunnels.

Standard 802.1Q provides VLAN tagging rules for optionally adding a tag header including the assigned VLAN identifier to the unit prior to transmitting the data unit on an egress port. Tags are applied or not depending on the VLAN of the data unit. The egress port tags the data unit unless the VLAN of the data unit belongs to an untagged set of VLANs. In this instance, the data unit is transmitted without the VLAN tag header via an untagged egress port.

Recent vintage switching nodes also often support multiprotocol label switching (MPLS). The MPLS protocol is described in detail in "Multiprotocol Label Switching Architecture," E. Rosen et al., Internet Engineering Task Force Request for Comment 3031, January 2001 (hereinafter referred to as RFC 3031). The MPLS protocol provides a connection-oriented service that enables tunneling across a wide area network. Unlike the hop-by-hop, on-demand forwarding of conventional Layer 2 (e.g. bridging) and Layer 3 (e.g. routing) protocols, the MPLS protocol provides a common protocol for end-to-end switching over heterogeneous switching nodes, referred to as label switch routers (LSRs), on pre-configured label switched paths (LSPs). A label switched path is a path through an MPLS network so that when a label is applied, traffic transits multiple routers in the LSP.

One use of the MPLS protocol is interconnection of bridged LANs over wide area networks. A primary goal of such MPLS implementations is seamless communication. That is, communication with a target host on a remote LAN (e. g. across the wide area network) should, to the extent possible, resemble communication with a target host on a local LAN. According to the MPLS protocol, this is preferably accomplished via labels attached to packets to be forwarded. When a packet is forwarded to its next hop, the assigned label is sent along with it. Analysis of the packet's network layer header is preferably done only once, and not repeated in subsequent hops. Rather, the label is used as an index into a table which specifies the next hop, and a new label. The old label is replaced with the new label, and the packet is forwarded to its next hop.

When the interconnected LANs are virtual bridged LANs, there are some potential obstacles to such seamless communication. For instance, if an egress port for an LSP is configured as an untagged 802.1Q egress port, the egress node for the LSP may not be able to readily determine the VLAN assignment for a data unit received over the LSP in order to properly process the underlying Layer 2 data unit. Even if the egress port is a tagged 802.1Q egress port, if the egress node belongs to a VLAN different from the VLAN of an ingress node, the original VLAN assignment will likely be lost. Moreover, if the egress node for the LSP supports different types of MPLS traffic, including non-802.1Q traffic, the egress node may not be able to readily differentiate traffic received over the 802.1Q LSP from other MPLS traffic in order to properly recover and process the underlying Layer 2 data unit.

Accordingly, there is a need for a system and method that allows application of the MLPS protocol virtual bridged LANs without loss of VLAN assignment information. Such a system and method should further process different types of MPLS traffic while allowing the underlying Layer 2 data unit to be properly recovered and processed.

### SUMMARY OF THE INVENTION

The present invention provides a VLAN tunneling protocol that is achieved by the system and method as defined in the appended claims and improves seamless interconnection of 802.1Q bridged LANs over wide area network (WANs).

### DESCRIPTION OF THE DRAWINGS

These and other features, aspects and advantages of the present invention will be more fully understood when considered with respect to the following detailed description, appended claims, and accompanying drawings where:
FIG. 1 is a schematic block diagram of a VLAN tunneling system according to one embodiment of the invention;
FIG. 2 is a schematic block diagram of a VLAN tunneling system where a source host transmits a data packet to a target host;
FIG. 3 is a more detailed block diagram of edge and core switching nodes in a label-switched path according to one embodiment of the invention;
FIG. 4 is as schematic diagram of a packet transmitted by the source host of FIG. 2 according to one embodiment of the invention;
FIG. 5 is a schematic diagram of the packet of FIG. 4 after being processed by an egress queue manager of an ingress edge switching node according to one embodiment of the invention;
FIG. 6A is a schematic diagram of the packet of FIG. 5 after being processed by an egress flow resolution logic of an ingress edge switching node according to one embodiment of the invention;
FIG. 6B is a schematic diagram of the packet of FIG. 5 after being processed by an egress flow resolution logic of an ingress edge switching node according to an alternative embodiment of the invention;
FIG. 7 is a schematic diagram of the packet of FIG. 6A or 6B after being processed by a penultimate core switching node in a label-switched path according to one embodiment of the invention; and
FIG. 8 is a flow diagram of a process for transmitting a data packet from the source host to the target host of FIG. 2 according to one embodiment of the invention.

### DETAILED DESCRIPTION OF THE SPECIFIC EMBODIMENTS

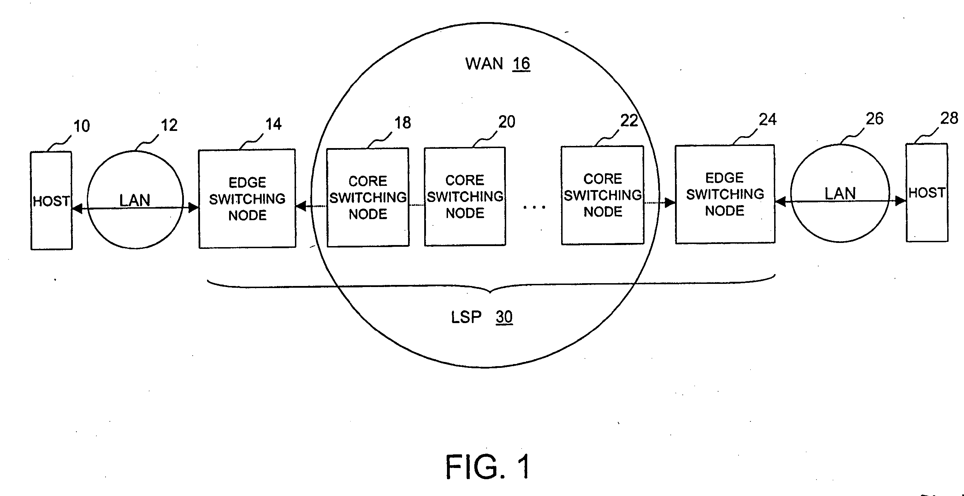

FIG. 1 is a schematic block diagram of a VLAN tunneling system according to one embodiment of the invention. The system preferably improves seamless interconnection of 802.1Q bridged LANs over wide area networks without loss of VLAN assignment information or other underlying Layer 2 data units.

Preferably, the VLAN tunneling system includes hosts 10, 28 seamlessly receiving and transmitting data packets, also referred to as frames, over a label switched path (LSP) 30 according to a multiprotocol label switching (MPLS) protocol. The LSP is preferably formed from edge switching node 14 to edge switching node 24 over a wide area network (WAN) 16 via one or more core switching nodes 18, 20, 22.

The hosts 10, 28 are respectively connected to either edge switching node 14 or 24 over a local area network (LAN) 12 or 26 communication media such as, for example, Ethernet or Token Ring. The hosts 10, 28 are preferably network end-stations such as, for example, personal computers, workstations, servers, or other end user devices.

The edge and core switching nodes 14-24 are preferably gateway devices such as, for example, switches, routers, and the like, having network interfaces for forwarding packetized communications originated by the hosts 10, 28. The edge and core switching nodes preferably support the MPLS protocol as set forth in RFC 3031. The edge and core switching nodes are also commonly referred to as label switch routers (LSRs). Edge switching nodes 14, 24 are each commonly referred to as an ingress LSR or egress LSR depending on the direction of the flow of traffic.

The LANs 12, 26 preferably include one or more VLANs which are logical subnetworks within a bridged LAN that differentiate service based on policies rather than physical location. Each VLAN preferably includes a plurality of network devices, such as, for example, servers, workstations, and PCs, together forming a logical work group within a larger backbone network. In the embodiment illustrated in FIG. 1, hosts 10 and 28 belong to the same VLAN.

The hosts 10, 28, LANs 12, 26, and edge and core switching nodes 14-24 may be interconnected via cables or other transmission media, and may support various data communication protocols such as, for example, Ethernet, Internet Protocol (IP), and Asynchronous Transfer Mode (ATM).

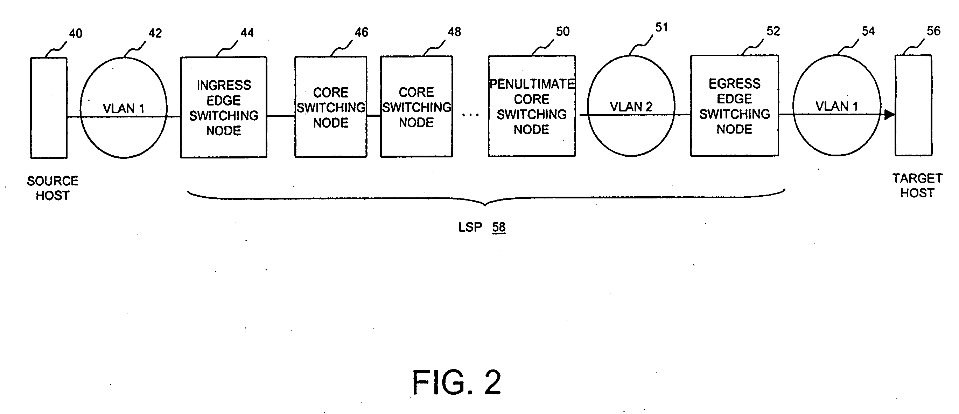

FIG. 2 is a schematic block diagram of a VLAN tunneling system where a source host 40 transmits a data packet to a target host 56. The source and target hosts 40, 56 are similar to the hosts 10 and 28 of FIG 1. Both the source host 40 and the target host 56 are preferably associated with a first VLAN 42, 54.

The data packet travels from the source host to the target host over an LSP 58. The LSP 58 preferably begins with an ingress edge switching node 44 and ends with an egress edge switching node 52, with multiple core switching nodes 46, 48, 50 in-between. The edge and core switching nodes 44-52 are similar to the edge and core switching nodes 14-24 of FIG. 1. According to the embodiment illustrated in FIG. 2, the penultimate core switching node 50 is preferably a node in the LSP 58 which is coupled to the egress edge switching node 52 via a second VLAN 51.

In general terms, the source host 40 transmits a data packet to the ingress edge switching node 44 through a port on the first VLAN 42. The ingress edge switching node receives the packet and applies a VLAN encapsulation header as set forth in the 802.1Q Standard. The VLAN encapsulation header preferably includes a VLAN ID of the first VLAN, namely a VLAN ID of "1." Preferably, the VLAN encapsulation header is added even if the egress port forwarding the packet is an untagged port.

The ingress edge switching node 44 further applies an MPLS header to the packet as set forth in RFC 3031. The MPLS header is used to tunnel the packet from the ingress edge switching node 44 to the egress edge switching node 52 via the LSP 58 in a seamless manner. The ingress edge switching node 44 further applies a Layer 2 (Data link/MAC layer) delivery header associated with the first hop, that is, core switching node 46, to allow proper delivery to the first hop.

As the data packet traverses the LSP tunnel, MPLS label swapping occurs in a conventional fashion as set forth in RFC 3031. At the penultimate core switching node 50, the node replaces the MPLS label with a new label value reserved for virtual bridged LAN data units. The reserved label value preferably informs the egress edge switching node 52 that the packet is a tunneled Ethernet frame, and that VLAN information is embedded within it.

The egress edge switching node 52 receives the tunneled packet, for example, through a port on the second VLAN 51. The egress edge switching node 52 preferably extracts the embedded VLAN ID from the packet and performs standard processing according to the 802.1Q Standard. The VLAN ID used, however, is the extracted VLAN ID embedded in the packet, that is, a VLAN ID of "1," instead of the VLAN ID associated with the port on which the packet was received, that is, a VLAN ID of "2." The originally assigned VLAN information is therefore maintained while traversing the LSP.

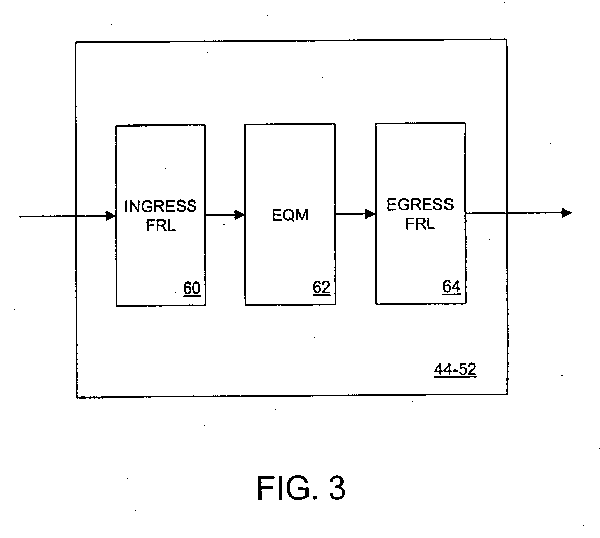

FIG. 3 is a more detailed block diagram of the edge and core switching nodes 44-52 according to one embodiment of the invention. The nodes 44-52 each preferably include an ingress flow resolution logic (FRL) 60, egress queue manager (EQM) 62, and egress FRL 64 for each switching interface, such as a port, of the node. The ingress and egress FRLs preferably classify and route incoming flows of packets. The EQM 62 preferably manages queues of packets for transmission out of the node's ports.

An original packet transmitted by the source host 40 is received by an ingress port (not shown) of the ingress edge switching node 44 and processed by its ingress FRL 60 in a conventional fashion. For instance, the ingress FRL 60 may check a destination source address for source learning and perform a destination address lookup and filtering. The ingress FRL 60 preferably selects an egress port (not shown) and transmits the packet to the egress port for forwarding the packet.

The egress port receives the packet and invokes its EQM 62 to enqueue the packet for transmission out of the port. When ready to be transmitted, the EQM 62 dequeues the packet and applies a VLAN tag to the packet, preferably according the 802.1Q Standard. The VLAN tag is applied even if the egress port is an untagged port. For an untagged port, however, an egress frame directed for the port's own VLAN is preferably not tagged.

The dequeued packet is transmitted by the EQM 62 to the egress FRL 64 which encapsulates it into an MPLS packet, with a source address set to the ingress edge switching node's address and a destination address set to the address corresponding to the first hop, that is, core switching node 46. The egress FRL 64 further attaches other header data as necessary and delivers the packet to the first hop.

As the packet traverses the LSP 58, it is received by an ingress port of each core switching node and processed by its ingress FRL 60. The ingress FRL identifies the MPLS packet by its Ethertype (Etype) protocol identification. The EQM 62 in the egress port of each core switching node replaces or removes the Ethernet header based on the link technology joining one core switching node to another. The egress FRL 64 in each core switching node performs appropriate MPLS label switching to appropriately follow the LSP 58. During the MPLS label switching process at the penultimate core switching node 50, however, the associated egress FRL 64 replaces the MPLS label with the reserved virtual bridged LAN data unit label.

After traversing the LSP 58, the packet is received by an ingress port (not shown) of the egress edge switching node 52 and processed by its ingress FRL 60. The ingress FRL 60 preferably identifies the reserved label inserted at the penultimate core switching node 50 and thus recognizes that VLAN information is embedded in the packet. The ingress FRL extracts the embedded VLAN information as well as the original source and destination addresses from the packet. The packet is then processed using the recovered values for transmitting to a final destination.

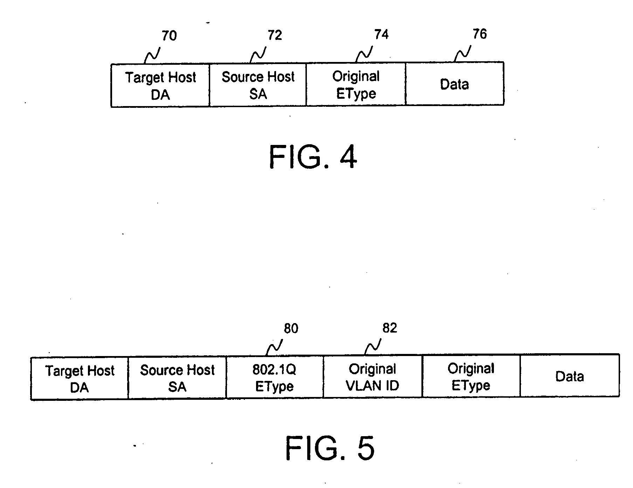

FIG. 4 is as schematic diagram of a packet transmitted by the source host 40 according to one embodiment of the invention. The packet preferably includes a destination address 70 of the target host 56, source address 72 of the source host 72, a protocol identifier 74, and payload data 76. If the packet is an Ethernet frame, the source and destination addresses are preferably Layer 2/MAC addresses. The protocol identifier 74 is preferably an Ethernet protocol.

FIG. 5 is a schematic diagram of the packet of FIG. 4 after being processed by the EQM 82 of the ingress edge switching node 44 according to one embodiment of the invention. The EQM 82 preferably adds a VLAN tag to the packet including a VLAN protocol type 80 and VLAN ID of the VLAN to which the source host 40 belongs even if the transmitting egress port is an untagged port. The VLAN protocol type 80 preferably identifies the 802.1Q Standard or any other VLAN classification protocol, as the protocol used for classifying the packet into a VLAN.

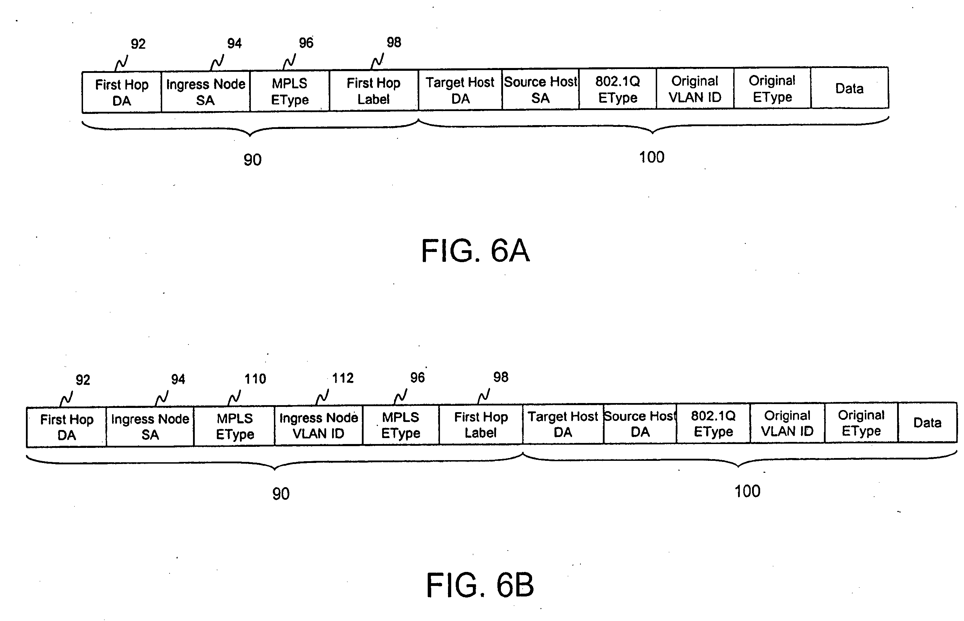

FIG. 6A is a schematic diagram of the packet of FIG. 5 after being processed by the egress FRL 64 of the ingress edge switching node 44 according to one embodiment of the invention. For purposes of the example illustrated in FIG. 6A, it is assumed that the egress port transmitting the packet to the first hop is an untagged port. The egress FRL 64 preferably encapsulates the packet illustrated in FIG. 5 into an MPLS packet. In this regard, the egress FRL 64 adds MPLS header information 90 including a destination address 92 that corresponds to the address of the first hop, that is, core switching node 46, and a source address 94 that corresponds to the source address of the ingress edge switching node 44. A protocol type 96 further identifies that the MPLS protocol is used for transmitting the packet. The MPLS header information also includes a label 98 used to identify the tunnel to the first hop. Preferably the entire packet illustrated in FIG. 5 that is received from the EQM 62 is included as the MPLS payload data 100.

FIG. 6B is a schematic diagram of the packet of FIG. 5 after being processed by the egress FRL 64 of the ingress edge switching node 44 according to another embodiment of the invention. For purposes of the example illustrated in FIG. 6B, it is assumed that the egress port for transmitting the packet to the first hop is a tagged port. As in the packet of FIG. 6B, the packet includes MPLS header information including the destination address 92 of the first hop, source address 94 of the ingress edge switching node 44, MPLS protocol type 96, and first hop label 98. In addition, because the egress port is a tagged port, the egress FRL 64 adds to the packet a VLAN header data including a VLAN classification protocol 110 and VLAN ID 112 of the VLAN to which the ingress edge switching node belongs for providing correct Layer 2 connectivity to the first hop.

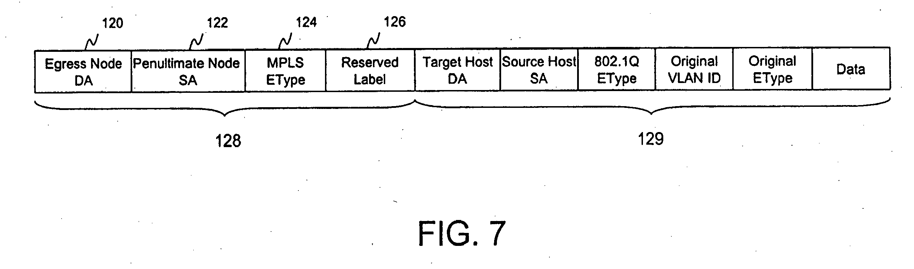

FIG. 7 is a schematic diagram of the packet of FIG. 6A or 6B after being processed by the penultimate core switching node 50. It is assumed, for purposes of this example, that the egress port of the penultimate core switching node 50 connecting to the receiving egress edge switching node 52 is an untagged link.

The packet preferably includes an MPLs header data 128 including a destination address 120 that corresponds to the address of the egress edge switching node 52, a source address 122 that corresponds to the source address of the penultimate core switching node 50, and a protocol type 124 indicating that the packet is an MPLS packet. The MPLs header data 128 further includes the reserved virtual bridged LAN data unit label for indicating to the receiving egress edge switching node 52 that VLAN information is embedded within. Preferably the entire packet illustrated in FIG. 5 that is received from the EQM 62 is included as the MPLS payload data 129.

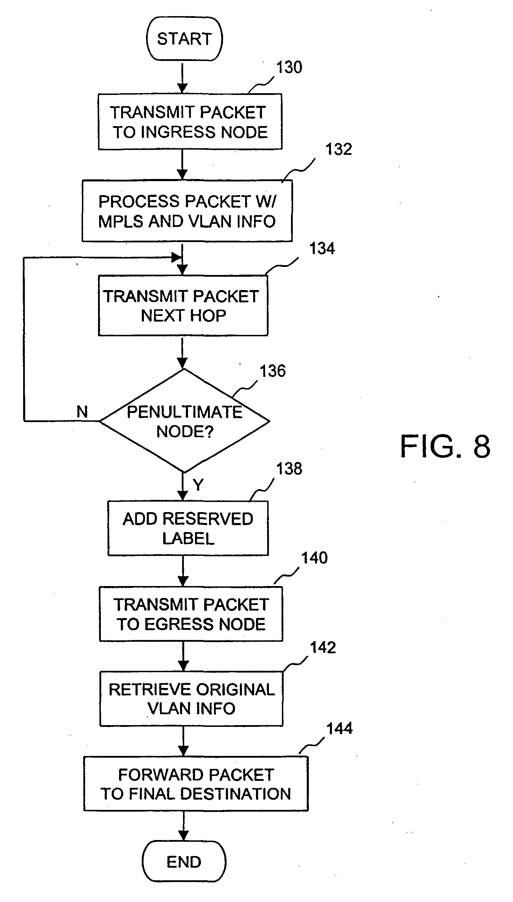

FIG. 8 is a flow diagram of a process for transmitting a data packet from the source host 40 to the target host 56 according to one embodiment of the invention. The process starts, and in step 130, the source host 40 transmits the packet to the ingress edge switching node 44. In step 132, the ingress edge switching node 44 processes the packet by attaching to it appropriate MPLS and VLAN classification information. The VLAN classification information is preferably attached even if the egress port used to forward the packet to the first hop is an untagged port.

In step 134, the processed packet is transmitted to a next hop on the LSP 58. In step 136, a determination is made if the penultimate core switching node 50 has been reached. If the answer is NC, the packet continues to be transmitted to the next hop, switching MPLS labels in a conventional manner, until the penultimate core switching node is reached.

In step 138, the penultimate core switching node, when reached, adds the reserved virtual bridged LAN data unit label to the received packet. In step 140, the processed packet is transmitted to the egress edge switching node 52. In step 142, the egress edge switching node retrieves the embedded original VLAN classification information and original source and destination address of the source host 40 and target host 56, respectively. In step 144, Layer 2 processing continues based on the retrieved information for forwarding the packet to the final destination, target host 56.

Although this invention has been described in certain specific embodiments, those skilled in the art will have no difficulty devising variations which in no way depart from the scope of the present invention. It is therefore to be understood that this invention may be practiced otherwise than is specifically described. Thus, the present embodiments of the invention should be considered in all respects as illustrative and not restrictive, the scope of the invention to be indicated by the appended claims and their equivalents rather than the foregoing description.

## Claims

1. A virtual local area network, VLAN, tunneling system including a first switching node (44) in a label-switched path (58), the first switching node (44) including: an ingress port that is associated with a VLAN and that is configured to receive a data packet; and an egress port configured as an untagged port, the egress port being configured to receive the data packet from the ingress port, to add to the data packet VLAN information (80, 82) associated with the VLAN of the ingress port, and to transmit the data packet over the label-switched path (58), said system further comprising a second switching node (52) configured to receive the data packet transmitted from the first switching node (44) via the label-switched path (58), the second switching node (52) further being configured to identify the data packet as a virtual bridged LAN data packet, retrieve the added VLAN information (80, 82) from the data packet, and transmit the data packet to a final destination (56) based on the retrieved VLAN information (80, 82), said VLAN tunneling system further including a third switching node (50) coupled to the second switching node (52) in the label-switched path, the third switching node (50) configured to add to the data packet a label value (126) reserved for packets originating from a port associated with a VLAN for informing the second switching node (52) that VLAN information (80, 82) is embedded in the data packet, wherein the second switching node (52) is configured to receive the data packet with the reserved label value (126) and to determine that the data packet includes VLAN information (80, 82) associated with an originating port based on the reserved label (126).

2. The VLAN tunneling system of claim 1, the third switching node (50) including: an ingress port configured to receive a data packet having an ingress label value; and an egress port configured to receive the data packet from the ingress port and to replace the ingress label value with a label value (126) reserved for packets originating from a port associated with a VLAN, the egress port further being configured to transmit the data packet to the second switching node (52) on the label-switched path (58) based on the ingress label value.

3. The VLAN tunneling system of claim 2, wherein the second switching node (52) is an egress edge switching node in the label-switched path (58).

4. The VLAN tunneling system of claim 3, wherein the second switching node (52) is configured to process the VLAN information (80, 82) for transmitting the data packet to a final destination (56).

5. The VLAN tunneling system of claim 1, wherein said first switching node (44) has a plurality of ports at least one of which has a VLAN associated therewith, said system being configured to check a data packet for VLAN assignment prior to transmission, wherein the former data packet is for transmission from said first switching node (44) to said second switching node (52) over said at least one port, and to transmit said data packet from said first switching node (44) to said second switching node (52) on said label-switched path (58) or not depending on a result of said check.

6. A virtual local area network, VLAN, tunneling method comprising the steps of: receiving a data packet at an ingress port of a first switching node (44), the ingress port being associated with a VLAN (42); forwarding the data packet to an egress port of said first switching node (44), the egress port being configured as an untagged port; adding (44) to the data packet at the egress port VLAN information (80, 82) and a label value (98) associated with a next switching node (46) in a label-switched path (58); and transmitting (134) the data packet to the next switching node (46) in the label-switched path (58), further comprising the steps of: receiving said data packet at an ingress port of a third switching node (50) coupled to the second switching node (52) in the label-switched path, the data packet having an ingress label value; forwarding the data packet to an egress port of the third switching node (50); replacing the ingress label value with a label value (126) reserved for data packets originating from a port associated with a VLAN (42); and transmitting the data packet to a second switching node (52) on said label-switched path (58) based on the ingress label value, wherein the second switching node (52) is an egress edge switching node in the label-switched path (58), said method further comprising the steps of: receiving at the second switching node (52) the data packet with the reserved label value (126); determining that the data packet includes VLAN information (80, 82) associated with an originating port based on the reserved label value (126); retrieving (142) the VLAN information (80, 82); and processing the VLAN information (80, 82) for transmitting (144) the data packet to a final destination (56).

## Patentansprüche

1. Tunnelsystem eines virtuellen lokalen Netzwerks, VLAN, mit einem ersten Vermittlungsknoten (44) in einem labelvermittelten Pfad (58), wobei der erste Vermittlungsknoten (44) umfasst: einen Eingangsport, welcher mit einem VLAN assoziiert und für den Empfang eines Datenpakets konfiguriert ist; und einen Ausgangsport, welcher als ein ungetaggter Port konfiguriert ist, wobei der Ausgangsport dafür konfiguriert ist, das Datenpaket von dem Eingangsport zu empfangen, dem Datenpaket VLAN-Informationen (80, 82), welche mit dem VLAN des Eingangsports assoziiert sind, hinzuzufügen und das Datenpaket über den labelvermittelten Pfad (58) zu übertragen, wobei das System weiterhin einen zweiten Vermittlungsknoten (52) umfasst, welcher für den Empfang des von dem ersten Vermittlungsknoten (44) über den labelvermittelten Pfad (58) übertragenen Datenpakets konfiguriert ist, wobei der zweite Vermittlungsknoten (52) weiterhin dafür konfiguriert ist, das Datenpaket als ein Datenpaket eines virtuellen gebrückten LAN zu identifizieren, die hinzugefügten VLAN-Informationen (80, 82) aus dem Datenpaket abzurufen und das Datenpaket auf der Basis der abgerufenen VLAN-Informationen (80, 82) an ein Endziel (56) zu übertragen, wobei das besagte VLAN-Tunnelsystem weiterhin einen dritten Vermittlungsknoten (50) umfasst, welcher an den zweiten Vermittlungsknoten (52) in dem labelvermittelten Pfad gekoppelt ist, wobei der dritte Vermittlungsknoten (50) dafür konfiguriert ist, dem Datenpaket einen für von einem mit einem VLAN assoziierten Port kommende Pakete reservierten Labelwert (126) hinzuzufügen, um den zweiten Vermittlungsknoten (52) darüber zu informieren, dass VLAN-Informationen (80, 82) in dem Datenpaket eingebettet sind, wobei der zweite Vermittlungsknoten (52) dafür konfiguriert ist, das Datenpaket mit dem reservierten Labelwert (126) zu empfangen und auf der Basis des reservierten Labels (126) zu ermitteln, dass das Datenpaket mit einem absendenden Port assoziierte VLAN-Informationen (80, 82) enthält.

2. VLAN-Tunnelsystem nach Anspruch 1, wobei der dritte Vermittlungsknoten (50) umfasst: einen Eingangsport, welcher für den Empfang eines Datenpakets mit einem Eingangs-Labelwert konfiguriert ist; und einen Ausgangsport, welcher dafür konfiguriert ist, das Datenpaket von dem Eingangsport zu empfangen und den Eingangs-Labelwert durch einen für von einem mit einem VLAN assoziierten Port abgesendete Pakete reservierten Labetwert (126) zu ersetzen, wobei der Ausgangsport weiterhin für die Übertragung des Datenpakets auf der Basis des Eingangs-Labelwerts an den zweiten Vermittlungsknoten (52) auf dem labelvermittelten Pfad (58) konfiguriert ist.

3. VLAN-Tunnelsystem nach Anspruch 2, wobei der zweite Vermittlungsknoten (52) ein Ausganskanten-Vermittlungsknoten in dem labelvermittelten Pfad (58) ist.

4. VLAN-Tunnelsystem nach Anspruch 3, wobei der zweite Vermittlungsknoten (52) für die Verarbeitung der VLAN-Informationen (80, 82) zur Übertragung des Datenpakets an ein Endziel (56) konfiguriert ist.

5. VLAN-Tunnelsystem nach Anspruch 1, wobei der besagte erste Vermittlungsknoten (44) eine Vielzahl von Ports aufweist, wobei mit mindestens einem dieser Ports ein VLAN assoziiert ist, wobei das besagte System dafür konfiguriert ist, ein Datenpaket vor der Übertragung auf eine VLAN-Zuweisung zu überprüfen, wobei das vorherige Datenpaket für die Übertragung von dem besagten ersten Vermittlungsknoten (44) über den besagten mindestens einen Port an den besagten zweiten Vermittlungsknoten (52) bestimmt ist, und das besagte Datenpaket von dem besagten ersten Vermittlungsknoten (44) auf dem besagten labelvermittelten Pfad (58) oder unabgängig von einem Ergebnis der besagten Prüfung an den besagten zweiten Vermittlungsknoten (52) zu übertragen.

6. Tunnelverfahren für ein virtuelles lokales Netzwerk, VLAN, die folgenden Schritte umfassend: Empfangen eines Datenpakets an einem Eingangsport eines ersten Vermittlungsknotens (44), wobei der Eingangsport mit einem VLAN (42) assoziiert ist; Weiterleiten des Datenpakets an einen Ausgangsport des besagten ersten Vermittlungsknotens (44), wobei der Ausgangsport als ein ungetaggter Port konfiguriert ist; Einzufügen (44) von VLAN-Informationen (80, 82) und eines mit einem nächsten Vermittlungsknoten (46) in einem labelvermittelten Pfad (58) assoziierten Labelwerts (98) zu dem Datenpaket an dem Ausgangsport; und Übertragen (134) des Datenpakets an den nächsten Vermittlungsknoten (46) in dem labelvermittelten Pfad (58), weiterhin die folgenden Schritte umfassend: Empfangen des besagten Datenpakets an einem Eingangsport eines an den zweiten Vermittlungsknoten (52) in dem labelvermittelten Pfad gekoppelten dritten Vermittlungsknotens (50), wobei das Datenpaket einen Eingangs-Labelwert aufweist; Weiterleiten des Datenpakets an einen Ausgangsport des dritten Vermittlungsknotens (50); Ersetzen des Eingangs-Labelwerts durch einen für von einem mit einem VLAN (42) assoziierten Port abgesendete Datenpakete reservierten Labelwert (126); und Übertragen des Datenpakets auf der Basis des Eingangs-Labelwerts an den zweiten Vermittlungsknoten (52) auf dem besagten labelvermittelten Pfad (58), wobei der zweite Vermittlungsknoten (52) ein Ausgangskanten-Vermittlungsknoten in dem labelvermittelten Pfad (58) ist, wobei das besagte Verfahren weiterhin die folgenden Schritte umfasst: Empfangen des Datenpakets mit dem reservierten Labelwert (126) an dem zweiten Vermittlungsknoten (52); Ermitteln, auf der Basis des reservierten Labelwerts (126), dass das Datenpaket mit einem absendenden Port assoziierte VLAN-Informationen (80, 82) enthält; Abrufen (142) der VLAN-Informationen (80, 82); und Verarbeiten der VLAN-Informationen (80, 82) für die Übertragung (144) des Datenpakets an ein Endziel (56).

## Revendications

1. Système de tunnellisation de réseau local virtuel, VLAN, comprenant un premier noeud de commutation (44) dans un chemin à commutation d'étiquettes (58), le premier noeud de commutation (44) comprenant : un port d'entrée qui est associé au VLAN et qui est configuré pour recevoir un paquet de données ; et un port de sortie configuré en tant que port non-étiqueté, le port de sortie étant configuré pour recevoir le paquet de données à partir du port d'entrée, pour ajouter au paquet de données des informations VLAN (80, 82) associées au VLAN du port d'entrée, et pour transmettre le paquet de données sur le chemin à commutation d'étiquettes (58), ledit système comprenant en outre un deuxième noeud de commutation (52) configuré pour recevoir le paquet de données transmis à partir du premier noeud de commutation (44) par l'intermédiaire du chemin à commutation d'étiquettes (58), le deuxième noeud de commutation (52) étant en outre configuré pour identifier le paquet de données comme un paquet de données de LAN virtuel ponté, pour récupérer les informations VLAN ajoutées (80, 82) à partir du paquet de données, et pour transmettre le paquet de données à une destination finale (56) en fonction des informations VLAN récupérées (80, 82), ledit système de tunnellisation VLAN comprenant en outre un troisième noeud de commutation (50) couplé au deuxième noeud de commutation (52) dans le chemin à commutation d'étiquettes, le troisième noeud de commutation (50) étant configuré pour ajouter au paquet de données une valeur d'étiquette (126) réservée aux paquets provenant d'un port associé au VLAN pour informer le deuxième noeud de commutation (52) que des informations VLAN (80, 82) sont intégrées dans le paquet de données, dans lequel le deuxième noeud de commutation (52) est configuré pour recevoir le paquet de données avec la valeur d'étiquette réservée (126) et pour déterminer que le paquet de données comprend des informations VLAN (80, 82) associées à un port d'origine en fonction de l'étiquette réservée (126).

2. Système de tunnellisation VLAN selon la revendication 1, le troisième noeud de commutation (50) comprenant : un port d'entrée configuré pour recevoir un paquet de données ayant une valeur d'étiquette d'entrée ; et un port de sortie configuré pour recevoir le paquet de données à partir du port d'entrée et pour remplacer la valeur d'étiquette d'entrée par une valeur d'étiquette (126) réservée aux paquets provenant d'un port associé à un VLAN, le port de sortie étant en outre configuré pour transmettre le paquet de données au deuxième noeud de commutation (52) sur le chemin à commutation d'étiquettes (58) en fonction de la valeur d'étiquette d'entrée.

3. Système de tunnellisation VLAN selon la revendication 2, dans lequel le deuxième noeud de commutation (52) est un noeud de commutation de bord de sortie dans le chemin à commutation d'étiquettes (58).

4. Système de tunnellisation VLAN selon la revendication 3, dans lequel le deuxième noeud de commutation (52) est configuré pour traiter les informations VLAN (80, 82) pour transmettre le paquet de données à une destination finale (56).

5. Système de tunnellisation VLAN selon la revendication 1, dans lequel ledit premier noeud de commutation (44) a une pluralité de ports dont au moins un a un VLAN associé à celui-ci/ceux-ci, ledit système étant configuré pour vérifier un paquet de données pour l'attribution de VLAN avant la transmission, dans lequel le paquet de données précédent est à transmettre à partir dudit premier noeud de commutation (44) vers ledit deuxième noeud de commutation (52) sur ledit au moins un port, et pour transmettre ledit paquet de données à partir dudit premier noeud de commutation (44) vers ledit deuxième noeud de commutation (52) sur ledit chemin à commutation d'étiquettes (58) ou indépendamment d'un résultat de ladite vérification.

6. Procédé de tunnellisation de réseau local virtual, VLAN, comprenant les étapes suivantes : recevoir un paquet de données au niveau d'un port d'entrée d'un premier noeud de commutation (44), le port d'entrée étant associé à un VLAN (42) ; acheminer le paquet de données vers un port de sortie dudit premier noeud de commutation (44), le port de sortie étant configuré comme un port non-étiqueté ; ajouter (44) au paquet de données au niveau du port de sortie des informations VLAN (80, 82) et une valeur d'étiquette (98) associées à un noeud de commutation suivant (46) dans un chemin à commutation d'étiquettes (58) ; et transmettre (134) le paquet de données au noeud de commutation suivant (46) dans le chemin à commutation d'étiquettes (58), comprenant en outre les étapes suivantes : recevoir ledit paquet de données au niveau d'un port d'entrée d'un troisième noeud de commutation (50) couplé au deuxième noeud de commutation (52) dans le chemin à commutation d'étiquettes, le paquet de données ayant une valeur d'étiquette d'entrée ; acheminer le paquet de données vers un port de sortie du troisième noeud de commutation (50) ; remplacer la valeur d'étiquette d'entrée par une valeur d'étiquette (126) réservée aux paquets de données provenant d'un port associé à un VLAN (42) ; et transmettre le paquet de données vers un deuxième noeud de commutation (52) sur ledit chemin à commutation d'étiquettes (58) en fonction de la valeur d'étiquette d'entrée, dans lequel le deuxième noeud de commutation (52) est un noeud de commutation de bord de sortie dans le chemin à commutation d'étiquettes (58), ledit procédé comprenant en outre les étapes suivantes : recevoir au niveau du deuxième noeud de commutation (52) le paquet de données avec la valeur d'étiquette réservée (126) ; déterminer que le paquet de données comprend des informations VLAN (80, 82) associées à un port d'origine en fonction de la valeur d'étiquette réservée (126) ; récupérer (142) les informations VLAN (80, 82) ; et traiter les informations VLAN (80, 82) pour transmettre (144) le paquet de données à une destination finale (56).
